# EUROPEAN PATENT SPECIFICATION

(11) **EP 2 077 237 B1**
(45) Date of publication and mention of the grant of the patent: **20.04.2011**
(21) Application number: 08000116.7
(22) Date of filing: 04.01.2008
(51) Int. Cl.: B65D 51/30, B65D 81/26, B32B 27/18, B32B 27/30

(54) **Container having improved oxygen barier function**
Container mit verbesserter Sauerstoffträgerfunktion
Récipient ayant une fonction de barrière d'oxygène améliorée

(43) Date of publication of application: 08.07.2009
(73) Proprietor: Airsec S.A.S., 94600 Choisy le Roi (FR)
(72) Inventor: Portier, Benoit, 18000 Bourges- France (FR); Logel, Valère, 92300 Levallois Perret (FR)
(74) Representative: Schweighart, Peter

(56) References cited:
- EP-A- 0 059 274
- EP-A- 0 249 051
- GB-A- 2 429 451
- US-B1- 6 174 952

## Description

The present invention relates to a container comprising an outer container wall layer and a desiccant capable of absorbing moisture from an interior space of the container. Further, the invention relates to the use of such container for packaging goods sensitive to moisture and/or harmful gases, in particular oxygen.

For some goods, like pharmaceuticals or vitamin preparations, it is necessary to store them in an environment that comprises as little moisture and oxygen as possible to preserve their quality. Therefore, containers have been developed, that contain a desiccant such that moisture introduced into the interior of the container upon opening to access the goods and sealed therein upon closing the container again may be removed from the atmosphere inside the container.

In WO 96/04189 A is disclosed a container, in particular for pharmaceutical substances, having a container body of a substantially atmospheric moisture-impermeable material. The container incorporates a solid element which is made at least in part of a desiccant polymer, wherein the solid element is in contact with the atmosphere inside the container.

EP 1 686 071 discloses a container for moisture-sensitive goods, with a container bottom, a container wall and a cover which may be opened and closed repeatedly. The container wall is provided with a desiccant-containing body for absorbing moisture contained in the interior of the container. The cover has a cover base and a cover lid which are pivotable against each other. The cover base has a through-opening. Sealing means are provided to seal the through-opening by the cover lid. The desiccant containing body is arranged at least partially surrounding the through-opening.

A further problem in storage of sensitive goods in containers exists in that oxygen will permeate, although in small amounts, the outer wall of the closed container and may oxidize compounds contained in the goods. After longer storage, the quality of such goods may be impaired or the products may even be destroyed. Therefore a great need exists in industry for improved containers which do not only have good moisture-barrier function, but also provide a high barrier function to other gases, in particular oxygen, which may harm the goods to be packaged.

EP 0 059 274 A1 relates to a multi-layer polymeric structure providing for impermeability to oxygen and, furthermore, to moisture in order to preserve oxygen barrier qualities. The document discloses rigid containers having a wall structure comprising inner and outer layers of a blend of two polyolefins, adhesive layers that contain drying agents and an innermost barrier layer of EVOH.

GB 2 429 451 A discloses a tray for packing a foodstuff such as pre-cooked meat. Said tray is made of a polyethylene terephathalate film and an oxygen barrier film. The tray is sealed by means of a film comprising an oxygen barrier layer of EVOH that is sandwiched with polyethylene terephathalate layers. The tray contains a scavenging element such as iron in order to absorb oxygen.

Accordingly, it is an object of the present invention to provide a container having at the same time high moisture and oxygen barrier function, and which may be easily produced at low cost.

The object of the invention is solved by the subject-matter of claim 1. Preferred embodiments of the container are defined in the depending claims.

The inventors have found that with an EVOH-layer covering the interior side of an outer container wall layer, oxygen permeation from the surroundings into the interior space of the container may be kept for a prolonged time at low level when a desiccant is arranged in the interior space of the container such that moisture introduced into the interior space of the container, e.g. by permeation through the container wall or by opening and closing the container again for taking out goods from the container interior space, will be effectively absorbed.

It is known that EVOH continuously looses its ability as a barrier against oxygen permeation with increasing water uptake. Without wishing to be bound by that theory the inventors believe, that humidity present in the container interior is preferentially absorbed by the desiccant rather than by the hydrophilic EVOH-layer. Therefore, the water uptake of the EVOH-layer is retarded and the EVOH-layer keeps its function as an oxygen barrier over a longer period of time. The quality of goods packaged in the container therefore may be kept at a high level over a prolonged time.

Goods sensitive to moisture and/or oxygen contained in the container may therefore be stored for long time without considerable loss in their quality even if the container is repeatedly opened and closed to take out some of the goods from the container. Thus, by the simple combination of an EVOH-layer and a desiccant, as disclosed herein, the container of the invention at the same time provides excellent protection for moisture and oxygen sensitive goods.

The invention therefore refers to a container comprising an outer container wall layer and a desiccant capable of absorbing moisture from an interior space of the container, wherein an interior side of the outer container wall layer is covered by an EVOH-layer.

The term "container" as used herein shall include any form of container as known to the skilled person. The container is closed or closable and has an interior space. The container may be flexible or rigid. Also, it may for example be in the form of a bag, a bottle, a canister, a box, a vial or the like.

The container comprises an outer container wall layer with an outer side surface oriented towards the surrounding of the container and an inner side surface oriented towards the interior space of the container. The outer container wall layer may comprise a single layer or may be comprised of two or more layers arranged one on the other thereby forming a sandwich structure. On the outer side of the outer container wall layer may be fixed a label, e.g. made of paper, cardboard or a thin polymer foil, onto which e.g. a trademark or some explanations regarding the goods to be packaged in the container may be printed. Such trademark, explanations or other graphic motives may also be printed directly on the outer side surface of the outer container wall layer.

The inner side surface of the outer container wall layer is covered by an EVOH-layer. The EVOH-layer may be fixed directly to the inner side surface of the outer container wall layer or may be fixed indirectly, e.g. by means of an intermediate layer. The EVOH-layer covers the whole inner side surface of the outer container wall layer.

The EVOH-layer is basically formed by an EVOH-copolymer formed from vinyl alcohol and ethylene monomers. The EVOH-copolymer may be obtained according to known procedures, in particular copolymerization of ethylene and a suitable vinyl alcohol monomer, e.g. vinyl acetate. The EVOH-copolymer may contain 20 to 85 mol-%, preferably 30 to 50 mol-% repeating units originating from vinyl alcohol and 80 to 15 mol-%, preferably 50 to 70 mol-% repeating units originating from ethylene. Repeating units originating from other monomers than ethylene and vinyl alcohol may also be present in the EVOH-polymer. According to an embodiment the amount of repeating units contained in the EVOH-copolymer originating from other monomers than ethylene and vinyl alcohol is less than 20 mol-%, preferably less than 10 mol-%. Preferably, however, the EVOH-copolymer comprises only repeating units originating from ethylene and vinyl alcohol.

The container further comprises a desiccant arranged such, that moisture present in an interior space of the container is absorbed by the desiccant and only a very low humidity is present in the interior space of the container. The term "desiccant" as used herein shall encompass any absorbent or adsorbent which is capable of absorbing or adsorbing water in liquid form or in the form of moisture (water vapour), or otherwise capable of removing water or moisture from the surrounding atmosphere. Non-limiting examples of suitable desiccants include silica gel, zeolites, desiccant clays, molecular sieves, activated carbon, earth alkali oxides and the like, and combinations thereof. The desiccant may be present in the container packed in a sachet, a canister or a capsule which is dropped inside the container beside the goods to be protected or the desiccant may be filled into a hollow compartment or canister attached e.g. to a cap used for closing the container.

The desiccant is combined with an oxygen scavenger. By the additional use of an oxygen scavenger, the protection of the packaged goods against oxygen is improved. Suitable oxygen scavengers are e.g. polymers bearing functional groups capable to react with molecular oxygen. A commercially available polymer oxygen scavenger is e.g. Pharmakeep^{®} from Mitsubishi Gas Chemical Company, Inc., Chiyo-daku, Tokyo, JP. Any oxygen still penetrating into the container will be consumed by the oxygen scavenger. Such oxygen present inside the container may be e.g. oxygen introduced when packaging the goods and may be contained within the headspace above the packaged goods. The oxygen scavenger may e.g. be mixed with the desiccant and filled into a capsule dropped into the container.

According to the present invention, the desiccant is arranged in the container such that it is capable of absorbing water or moisture from the interior space of the container or, in other words, is arranged such that humidity that may penetrate into the EVOH-layer or is contained in the EVOH-layer is, at least in part, absorbed by the desiccant. The term "absorbing" shall also encompass "adsorbing" or "otherwise reacting with". For example, the desiccant may be present in a desiccant-containing body inserted in the interior space of the container. Depending on the type of container envisaged and its particular use, the desiccant may be present in any form either loosely inserted into the interior space of the container or attached to the container wall or container cap or cover (if present) in any conventional manner. For example, the desiccant may be present in a desiccant-containing body in the cover of a container or may be present in a desiccant containing insert.

According to a preferred embodiment, the outer container wall layer comprises at least one layer made of a thermoplastic polymer material. "Thermoplastic polymer material" as used herein is defined as a polymer material that exhibits thermoplastic properties. While the thermoplastic material can be comprised of a polymer of a single monomer, a copolymer of two or more monomers, a mixture of two or more polymers from single monomers, mixtures of two or more copolymers, or mixtures of one or more polymers from a single monomer and one or more copolymers, in a preferred embodiment, the thermoplastic polymer material comprises a mixture of two or more copolymers or a mixture of at least one polymer from a single monomer and at least one copolymer. As a non-limiting example, the thermoplastic polymer material may be prepared from a blend of linear low density polyethylene (LLDPE), low density polyethylene (LDPE) and an ethylene vinyl acetate (EVA) copolymer, wherein each of the components include an ethylene unit.

Non-limiting examples of polymers from single monomers include: polystyrenes; polyolefins (e.g. polyethylene (HD), polypropylene); polyacrylates, polymethacrylates, polyamides, polyimides, polyesters, such as polyethylene-terephthalate, polybutylene-terephthalate and polycyclohexylene-dimethylene-terephthalate, polycarbonates, polyethersulfones, polyurethanes, polystyrenes and polystyrene based copolymers such as acrylonitrile-butadiene-styrene (ABS) and acrylonitrile-styrene copolymer (SAN), polyacrylonitrile, polyamide-imide, polybutadiene, polyketones, polyhydroxyalkanoates, polyetheretherketone (PEEK) polyetherimides, polyethersulfones, polyacetic acid, polymethylpentene and polyvinyl chloride. Non-limiting examples of copolymers include: styrene-butadiene rubbers (SBR); styrene-ethylene-butadiene-styrene copolymers (SEBS); butyl rubbers; ethylene-propylene rubbers (EPR); ethylene-propylene-diene monomer rubbers (EPDM); ethylene-vinyl acetate copolymers (EVA); ethylene-acrylate or butadiene-acrylonitrile; maleic anhydride modified polymers and copolymers; polyether-polyamide copolymers; and grafted copolymers. Further, the thermoplastic material may also consist of polymer blends and alloys.

The outer container wall layer may comprise several layers arranged on top of each other in a side-by side manner wherein the layers may be made of different materials, e.g. different polymer materials. E.g. a metal foil, like an aluminium foil, may be included as a layer of the outer container wall layer. According to another embodiment, a metal can be sputtered onto the surface of the outer container wall layer to form a thin metal layer. Further, a labelling layer used to allow or improve labelling of the container may also be included. Also, an additional oxygen barrier layer or an oxygen absorbing layer as known in the art may be present as part of the outer container wall layer.

According to an embodiment, however, the outer container wall layer comprises only a single layer made of a thermoplastic polymer material. Suitable thermoplastic materials are e.g. various types of polyethylene, e.g. high density polyethylene, polypropylene, polybutylene, polystyrene, and polystyrene based copolymers.

According to a further embodiment, the outer container wall layer may be composed of a sandwich structure comprising layers made of different materials. According to an embodiment, the outer container wall layer may comprise a two layer sandwich structure comprising an outer layer facing towards the outside of the container and an inner layer facing towards the inside of the container, i.e. oriented towards the EVOH-layer. Only the outer layer is visible to a customer and, therefore, only the outer layer is made of pure material to obtain good surface quality whereas the inner layer is made of material of lower quality, e.g. a re-granulated material. The outer layer preferably has a layer thickness of 50 to 150 µm. With this embodiment an outer container wall layer may be obtained having the required barrier and mechanical properties and providing high surface quality which is advantageous in view of optical properties and for e.g. printing a label on the outer container wall surface. At the same time, cost saving may be achieved due to the use of re-granulated material in layers of the outer container wall layer not visible to a customer.

As discussed above, the EVOH-layer contains an EVOH-copolymer. According to an embodiment, the EVOH-layer comprises more than 90 wt.-% EVOH-copolymer, preferably more than 95 wt.-%, particularly preferred more than 99 wt.-% EVOH-copolymer, or consists essentially or completely of EVOH-copolymer.

According to a preferred embodiment, an inner side surface of the EVOH-layer is at least in part covered by an inner container wall layer. Preferably, the complete inner side surface of the EVOH-layer is covered by the inner container wall layer. In this embodiment, the EVOH-layer is, at least partially, sandwiched between the outer container wall layer and the inner container wall layer. The inner container wall layer may comprise a single layer or may be a sandwich of several layers positioned adjacent to each other. According to an embodiment, the inner container wall layer comprises only a single layer.

The inner container wall layer may be made of the same materials as discussed above for the outer container wall layer. For a given container, the materials selected for the inner container wall layer and the outer container wall layer may be the same or may be different. Preferably, the inner container wall layer is made of a thermoplastic polymer. Suitable thermoplastic polymers were already discussed with reference to the outer container wall layer.

The thickness of the inner container wall layer may be selected independently from the outer container wall layer. The thickness of the inner container wall layer may be selected the same value as the outer container wall layer or may be selected larger or smaller. According to an embodiment of the container, the thickness of the inner container wall layer is selected smaller than the thickness of the outer container wall layer. EVOH-copolymer is hygroscopic and, therefore, humidity may permeate from the surroundings of the container through the outer container wall layer to be captured in the EVOH-layer. By providing an inner container wall layer of a small thickness, the humidity may then further diffuse into the interior container space more easily to be then adsorbed by the desiccant. With this embodiment the oxygen barrier function of the EVOH-layer may be maintained at its maximum over a longer period.

Preferably, the thickness of the inner container wall layer is less than 80 %, particularly preferred less than 60 % of the thickness of the outer container wall layer. Preferably, the thickness of the inner container wall layer is at least 20 %, more preferred at least 40 % of the thickness of the outer container wall layer.

Suitably, the thickness of the outer container wall layer is selected within a range of 200 µm to 2 mm, preferably within a range of 300 µm to 1.5 mm, particularly preferred within a range of 500 µm to 1.0 mm. The thickness of the EVOH-layer is preferably selected within a range of 30 µm to 800 µm, more preferred within a range of 40 µm to 200 µm, particularly preferred within a range of 50 µm to 150 µm. The thickness of the inner container wall layer, if present, is preferably selected within a range of 30 µm to 2.0 mm, more preferred within a range of 40 µm to 1 mm, particularly preferred within a range of 50 µm to 700 µm.

According to an embodiment of the container, an adhesive layer is arranged between the outer container wall layer and the EVOH-layer. Any suitable adhesive known to the skilled worker may be used.

According to a further embodiment of the container, a further adhesive layer is arranged between the EVOH-layer and the inner container wall layer. Any suitable adhesive known to the skilled worker may be used. The adhesive may be the same as used for the adhesive layer arranged between the outer container wall layer and the EVOH-layer or may be different. Examples for suitable adhesives are linear low density polyethylene resins, e.g. of the Bynel^{®}-type offered by DuPont™ (DuPont de Nemours Int'1. S.A., Geneva, Switzerland).

The thickness of the adhesive layers, independently from each other, may be selected within a range of 10 to 100 µm, preferably 30 to 100 µm.

The container according to the invention may have any form suitable for packaging goods. The container may have the form of a bag which is opened by cutting one edge of the bag to take out the goods from the container. Preferably, however, the container is designed for repeated opening and closing to take out the goods when desired. According to an embodiment, the container comprises an aperture and a container cap for closing the aperture. Every suitable type of cap may be used, e.g. a screw cap. The cap may be separate or in the form of a unitary body with the container body.

According to an embodiment, the container comprises an aperture for taking out goods stored in the container, wherein the aperture is closed by an induction seal. According to this embodiment, the aperture may be covered by a thin metal foil, e.g. an aluminium foil, which is fixed to the rim of the aperture by an adhesive, e.g. a melt adhesive. The seal further reduces the amount of oxygen diffusing into the interior space of the container during storage. Upon the first opening of the container the seal may be broken by the customer to then take out goods stored in the container. The container may then be closed again by means of a screw cap or a stopper introduced into the aperture of the container. The desiccant may be located inside the container for example by dropping a desiccant sachet, canister or capsule filled with desiccant into the container as described e.g. in US 5,759,241.

According to a further embodiment, the desiccant may be positioned in a cap used to close the aperture of the container, such that the desiccant will always be held in a suitable position and the desiccant will not mix with goods packaged in the container.

The container according to the invention may be produced according to methods known from the state of the art. The layers of the container wall may e.g. be formed by co-extrusion and the container may be produced by e.g. blow moulding of the layers comprised in the container wall.

According to a further embodiment of the invention, the container may be formed by co-injection.

The container according to the invention is in particular suitable for packaging goods sensitive to moisture and/or oxygen. According to a further aspect, the invention refers to the use of a container as described above for packaging of goods sensitive to moisture and/or oxygen.

Further details, advantages and features may be taken from the following description of several embodiments of the present invention with reference to the drawings.

In the drawing:
- Fig. 1:: is a sectional view of a first embodiment of a con- tainer according to the invention;
- Fig. 2:: is an enlarged view of a cross section through a por- tion of the sidewall of the container marked "A" in fig 1;
- Fig. 4:: is a sectional view of a container according to the invention, wherein the desiccant is contained within a capsule dropped inside the bottle and the container is closed by an induction seal and a repositionable screw-cap;
- Fig. 6:: is a sectional view of a container according to the invention comprised of a co-injected housing and a desiccant entrained canister assembled inside the container.

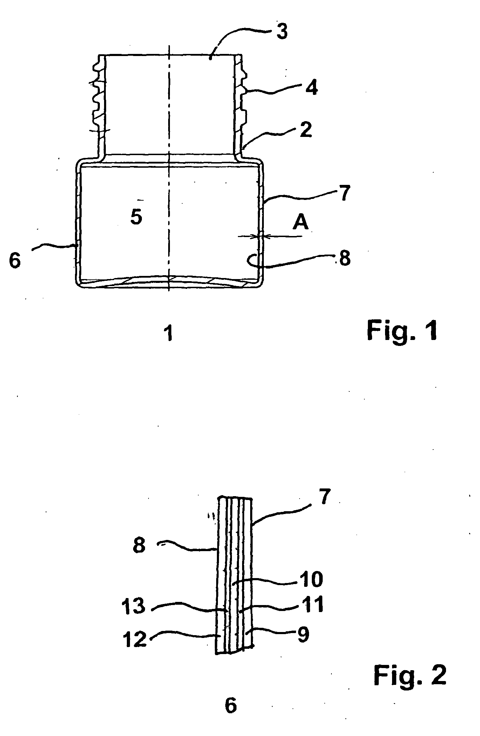

Fig. 1 shows a sectional side view of a first embodiment of a container according to the invention. A container body 1 is provided with a neck portion 2 surrounding a container opening 3. On its outer surface neck portion 2 is provided with a thread 4. Container opening 3 may be closed by a screw cap (not shown). Container 1 comprises an interior space 5 for packaging goods (not shown). Interior space 5 is surrounded by a container wall 6 provided with an outer surface 7 directed towards the surrounding of the container and an inner surface 8 directed towards interior space 5 of container 1. Container wall 5 comprises several layers situated adjacent to each other thereby providing a sandwich-structure.

A detailed view of the structure of container wall 6 is shown in fig. 2 which is an enlarged view of a section marked "A" in fig. 1. Container wall 6 comprises an outer container wall layer 9 made of a thermoplastic polymer, e.g. HDPE (high density polyethylene). Adjacent to an inner side surface of outer container wall layer 9 is situated EVOH-layer 10 made of an EVOH-copolymer. Between outer container wall layer 9 and EVOH-layer 10 is positioned an adhesive layer 11. Adjacent to the side of EVOH-layer 10 opposite to outer container wall layer 9 is situated inner container wall layer 12. Inner container wall layer 12 is also made from e.g. HDPE. Between EVOH-layer 10 and inner container wall layer 12 is arranged a further adhesive layer 13. The container is manufactured by extrusion-blowmoulding a sandwich structure comprising outer container wall layer 9, adhesive layer 11, EVOH-layer 10, adhesive layer 13 and inner container wall layer 12 in a basically known manner. In interior space 5 of container 1 may be placed a small container (not shown) comprising a desiccant. As an alternative, the container comprising the desiccant may also be fixed to the side of the container cap oriented towards interior space 5 in a closed position.

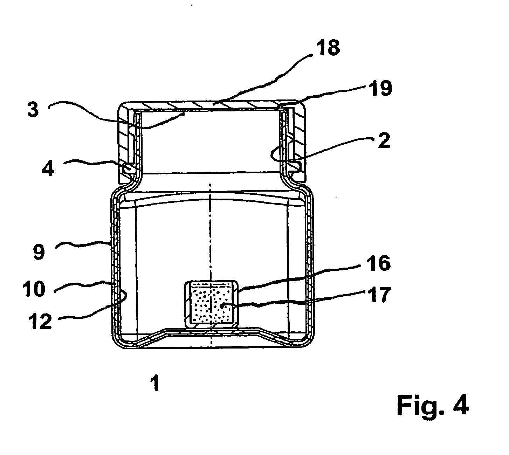

Fig. 4 shows a sectional view of a container according to the invention wherein the desiccant is contained in a small capsule 16 placed inside the container. The container basically is the same as described with reference to fig. 1. Container body 1 is provided with a neck portion 2 surrounding a container opening 3. On its outer surface neck portion 2 is provided with a thread 4. Container opening 3 may be closed by a screw cap 18. Container opening 3 is sealed by a thin aluminium foil 19 induction sealed to the outer rim of container opening 3. The induction seal formed by aluminium foil 19 may be broken upon the first opening of the container by a customer. The container wall of container body 1 is formed by a sandwich of an outer container wall 9, an EVOH-layer 10 and an inner container wall 12. Inside container body 1 is placed a small desiccant capsule 16 containing a desiccant 17, e.g. silica gel. The desiccant capsule 16 is closed by a moisture permeable cardboard to allow access of humidity to desiccant 17.

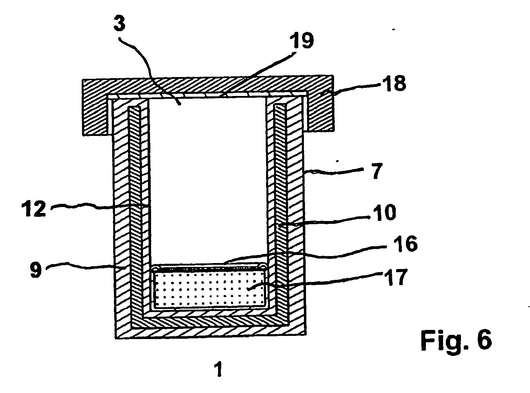

Fig. 6 is a sectional view of a container according to the invention of a similar construction as the container shown in fig. 5 wherein, however, instead of insert 20 is placed a desiccant capsule 16 in the interior space of container body 1. As already described with reference to fig. 5, container body 1 is formed of a sandwich structure comprising outer container wall 9, EVOH-layer 10 and inner container wall layer 12. Container opening 3 is sealed by an aluminium foil 19 and a cap 18. Fitted inside the interior space of container boy 1 is located a desiccant capsule 16 containing desiccant 17.

### Examples:

The oxygen barrier function was determined by measuring the oxygen transmission rate through the container wall with a MOCON Oxtran 2/21 according to ASTM standard FR 1307 (in cm³ O₂/package · day).

A container having a container body and a screw cap is formed by conventional blow-extrusion of the container body and injection moulding of the cap. The dimensions of the container are as follows: height: 49.12 mm; square section of 38.48 x 38.48; inner neck diameter of container body: 26.89 mm. The container body has a container wall having five layers which are formed by co-extrusion. The inner layer facing the interior space of the container and the outer layer facing the surroundings of the container is comprised of HDPE (Paxon^{®} AS55-003 from Exxon-Mobil Chemical, US). The middle layer is produced of EVOH (EVAL F 101 B, Kuraray Co., Ltd., JP). An adhesive layer is arranged between the outer container layer and the EVOH-layer and the EVOH-layer and the inner container wall layer, respectively. The adhesive layers are produced from anhydride modified linear low density polyethylene (LLDPE) resins (Bynel^{®} 41E710 from DuPont)

The thickness of the five layers is as follows:
Inner container wall layer (PEHD): 465 µm
Adhesion layer: 80 µm
EVOH-layer: 80 µm
Adhesion layer: 80 µm
Outer layer (PEHD): 460 µm.

The desiccant used was in the form of a desiccant-containing capsule dropped inside the container as displayed in fig. 4 and comprising molecular sieve 4A. The volume of the inner space of the container was 45 cm³.

In order to show the improvement of the oxygen barrier function provided by the present invention, the oxygen transmission rate through the container wall of the container of the invention was measured according to ASTM standard FR 1307 in cm³ O₂ / package · day.

The mean value for oxygen transmission rate recorded for bottles according to the present invention was measured at 0.0005 cm³ O₂ / package · day

Compared to an identical bottle but without desiccant, this means an improvement by more than a factor 8 : Oxygen transmission rate recorded for reference bottles was measured at 0,0041 cm³ O₂ / package · day

### Test conditions:

Equipment: Mocon Oxtran 2/21
Temperature: 23 °C
Humidity level in test chamber: 85 %RH
Test gas pressure: 760 mmHg
Test gas concentration: 100 % Oxygen

### Reference signs

- 1: container body
- 2: neck portion
- 3: container opening
- 4: thread
- 5: interior space
- 6: container wall
- 7: outer surface
- 8: inner surface
- 9: outer container wall layer
- 10: EVOH-layer
- 11: Adhesive layer
- 12: Inner container wall layer
- 13: Adhesive layer
- 15: Outer polymer layer
- 16: Desiccant capsule
- 17: Desiccant
- 18: Cap
- 19: Aluminium foil seal

## Claims

1. Container comprising
- an outer container wall layer (9),
wherein the whole interior side of the outer container wall layer is covered by an EVOH-layer (10),
- an active oxygen scavenger working at humidity levels below 40 % relative humidity and,
- in a sachet, in a canister, in a capsule or in a body within the interior space of the container, a desiccant capable of absorbing moisture from an interior space of the container.

2. Container according to claim 1, wherein the outer container wall layer (9) comprises at least one layer made of a thermoplastic polymer material.

3. Container according to claim 1 or 2, wherein the EVOH-layer (10) comprises more than 90 wt.-% EVOH.

4. Container according to one of the preceding claims,
wherein an inner side surface of the EVOH-layer (10) is at least in part covered by an inner container wall layer (12).

5. Container according to claim 4, wherein the inner container wall layer (12) is made of a thermoplastic polymer.

6. Container according to one of claims 4 or 5, wherein the inner container wall layer (12) has a smaller layer thickness than the outer container wall layer (9).

7. Container according to claim 6, wherein the thickness of the inner container wall layer (12) is less than 80 % of the thickness of the outer container wall layer (9).

8. Container according to one of the preceding claims,
wherein between the outer container wall layer (9) and the EVOH-layer (10) is arranged an adhesive layer (11).

9. Container according to one of claims 4 to 8, wherein between the EVOH-layer (10) and the inner container wall layer (12) is arranged a further adhesive layer (13).

10. Container according to claim 8, wherein the thickness of the inner container wall layer (12) is more than 120 % of the thickness of the outer container wall layer (9).

11. Container according to one of the preceding claims,
wherein the container comprises an aperture (3) and a container cap (18) for closing the aperture.

12. Container according to claim 11, wherein the desiccant is arranged in the container cap (18).

13. Container according to claim 11, wherein the container aperture (3) is sealed by an induction seal (19).

14. Use of a container according to one of claims 1 to 13 for packaging of goods sensitive to moisture and/or oxygen.

## Patentansprüche

1. Behälter umfassend
- eine äußere Behälterwandschicht (9),
wobei die gesamte Innenseite der äußeren Behälterwandschicht mit einer EVOH-Schicht (10) bedeckt ist,
- einen aktiven Sauerstofffänger, der bei Feuchtigkeitsgehalten unter 40 % relativer Feuchte funktioniert, und
- ein Trockenmittel in einem Beutel, in einem Kanister, in einer Kapsel oder in einem Körper innerhalb des Innenraums des Behälters, das in der Lage ist, Feuchtigkeit aus dem Innenraum des Behälters zu absorbieren.

2. Behälter gemäß Anspruch 1, wobei die äußere Behälterwandschicht (9) wenigstens eine Schicht umfasst, die aus einem thermoplastischen Polymermaterial hergestellt ist.

3. Behälter gemäß Anspruch 1 oder 2, wobei die EVOH-Schicht (10) mehr als 90 Gew.% EVOH umfasst.

4. Behälter gemäß einem der vorstehenden Ansprüche, wobei eine Innenseitenoberfläche der EVOH-Schicht (10) wenigstens teilweise durch eine innere Behälterwandschicht (12) bedeckt ist.

5. Behälter gemäß Anspruch 4, wobei die innere Behälterwandschicht (12) aus einem thermoplastischen Polymer hergestellt ist.

6. Behälter gemäß einem der Ansprüche 4 oder 5, wobei die innere Behälterwandschicht (12) eine kleinere Schichtdicke als die äußere Behälterwandschicht (9) aufweist.

7. Behälter gemäß Anspruch 6, wobei die Dicke der inneren Behälterwandschicht (12) weniger als 80 % der Dicke der äußeren Behälterwandschicht (9) beträgt.

8. Behälter gemäß einem der vorstehenden Ansprüche, wobei zwischen der äußeren Behälterwandschicht (9) und der EVOH-Schicht (10) eine Klebstoffschicht (11) angeordnet ist.

9. Behälter gemäß einem der Ansprüche 4 bis 8, wobei zwischen der EVOH-Schicht (10) und der inneren Behälterwandschicht (12) eine weitere Klebstoffschicht (13) angeordnet ist.

10. Behälter gemäß Anspruch 8, wobei die Dicke der inneren Behälterwandschicht (12) mehr als 120 % der Dicke der äußeren Behälterwandschicht (9) beträgt.

11. Behälter gemäß einem der vorstehenden Ansprüche, wobei der Behälter eine Öffnung (3) und einen Behälterdeckel (18) zum Verschließen der Öffnung umfasst.

12. Behälter gemäß Anspruch 11, wobei das Trockenmittel in den Behälterdeckel (18) angeordnet ist.

13. Behälter gemäß Anspruch 11, wobei die Behälteröffnung (3) durch eine Induktionsversiegelung (19) abgedichtet ist.

14. Verwendung eines Behälters gemäß einem der Ansprüche 1 bis 13 zum Verpacken von Gütern, die empfindlich gegenüber Feuchtigkeit und/oder Sauerstoff sind.

## Revendications

1. Conteneur comprenant :
une couche (9) de paroi externe du conteneur,
où toute la face intérieure de la couche de paroi externe du conteneur est couverte par une couche (10) d'EVOH,
un capteur d'oxygène actif fonctionnant à des niveaux d'humidité en dessous de 40% d'humidité relative et,
dans un sachet, dans un bidon, dans une capsule ou dans un corps dans l'espace intérieur du conteneur, un dessicatif capable d'absorber l'humidité d'un espace intérieur du conteneur.

2. Conteneur selon la revendication 1, dans lequel la couche (9) de paroi externe du conteneur comprend au moins une couche réalisée en un matériau polymère thermoplastique.

3. Conteneur selon la revendication 1 ou 2, dans lequel la couche (10) d'EVOH comprend plus de 90% en poids d'EVOH.

4. Conteneur selon l'une des revendications précédentes, dans lequel une surface de la face interne de la couche (10) d'EVOH est au moins partiellement couverte par une couche (12) de paroi interne du conteneur.

5. Conteneur selon la revendication 4, dans lequel la couche (12) de paroi interne du conteneur est réalisée en un polymère thermoplastique.

6. Conteneur selon l'une des revendications 4 ou 5, dans lequel la couche (12) de paroi interne du conteneur a une épaisseur de couche inférieure à celle de la couche (9) de paroi externe du conteneur.

7. Conteneur selon la revendication 6, dans lequel l'épaisseur de la couche (12) de paroi interne du conteneur est de moins de 80% de l'épaisseur de la couche (9) de paroi externe du conteneur.

8. Conteneur selon l'une des revendications précédentes, dans lequel, entre la couche (9) de paroi externe du conteneur et la couche (10) d'EVOH, une couche adhésive (11) est agencée.

9. Conteneur selon l'une des revendications 4 à 8, dans lequel, entre la couche (10) d'EVOH et la couche (12) de paroi interne du conteneur, une couche (13) adhésive supplémentaire est agencée.

10. Conteneur selon la revendication 8, dans lequel l'épaisseur de la couche (12) de paroi interne du conteneur est de plus de 120% de l'épaisseur de la couche (9) de paroi externe du conteneur.

11. Conteneur selon l'une des revendications précédentes, dans lequel le conteneur comprend une ouverture (3) et un couvercle (18) de conteneur destiné à fermer l'ouverture.

12. Conteneur selon la revendication 11, dans lequel le dessicatif est agencé dans le couvercle (18) de conteneur.

13. Conteneur selon la revendication 11, dans lequel l'ouverture (3) du conteneur est fermée hermétiquement par un joint d'induction (19).

14. Utilisation d'un conteneur selon l'une des revendications 1 à 13 pour emballer des produits sensibles à l'humidité et/ou à l'oxygène.
